# EUROPÄISCHE PATENTSCHRIFT

(11) **EP 0 842 768 B1**
(45) Veröffentlichungstag und Bekanntmachung des Hinweises auf die Patenterteilung: **08.06.2005**
(21) Anmeldenummer: 97119019.4
(22) Anmeldetag: 31.10.1997
(51) Int. Cl.: B32B 27/32, B32B 27/40

(54) **Weichelastische Mehrschichtfolie und ihre Verwendung**
Flexible multilayer film and its use
Feuille souple multicouche et son utilisation

(30) Priorität: 13.11.1996 DE 19646853
(43) Veröffentlichungstag der Anmeldung: 20.05.1998
(73) Patentinhaber: WOLFF WALSRODE AG, 29655 Walsrode (DE)
(72) Erfinder: Schledjewski, Ralf, Dr., 29693 Hodenhagen (DE); Schultze, Dirk, Dr., 40221 Düsseldorf (DE); Hargarter, Nicole, Charlottesville, VA 22903 (US)
(74) Vertreter: Pettrich, Klaus-Günter, Dr.

(56) Entgegenhaltungen:
- EP-A- 0 308 683
- EP-A- 0 365 211
- EP-A- 0 624 463
- EP-A- 0 742 097
- EP-A- 0 767 052
- US-A- 3 857 754
- US-A- 4 410 595

## Beschreibung

Diese Erfindung betrifft mindestens zweischichtige elastische thermoplastische Folien, die aus mindestens einer Schicht aus thermoplastischem Polyurethan und mindestens einer weiteren Schicht bestehen, die aus einem Haftvermittler mit einer geringen Vicat-Erweichungstemperatur gebildet wird.

Die Kombination von Urethan-Polymer und Haftvermittler ergibt eine weichelastische Folie mit hohem mechanischen Eigenschaftsprofil und einer sehr guten Wasserdampfsperrwirkung.

Für die Herstellung flexibler Behälter für gasförmige oder flüssige Medien, wie zum Beispiel Wasserbetten, werden weichelastische Folien mit guten mechanischen Eigenschaften benötigt. Es ist bekannt, daß derartige Anwendungen mit Folien aus Weich-PVC bedient werden können. Aufgrund der spezifischen Eigenschaften des PVC ist dabei ein relativ hoher Materialeinsatz erforderlich.

Einschichtige Folien aus thermoplastischen Polyurethanen (TPU), Verfahren zu ihrer Herstellung sowie ihre Verwendung sind nach dem Stand der Technik beispielsweise aus der EP 0 308 683, der EP 0 526 858, der EP 0 571 868 oder der EP 0 603 680 bekannt. Die in diesen Schriften beschriebenen Aufbauten lassen sich als höherschmelzende Schicht bzw. Schichten in Dublofolien integrieren oder sind bereits in die nach ihrer Art bekannten Dublofolien integriert worden. Ebenso ist die Herstellung von TPU-Folien unter Einsatz von im wesentlichen unverträglichen Polymeren als Mattierungsmittel in TPU-Elastomeren z.B. in der DE 41 26 499 beschrieben.

Es ist weiterhin bekannt, daß durch Zugabe eines niedermolekularen Harzes mit einem nicht wachsartigen Charakter, sowohl natürlicher als auch synthetischer Art, eine deutliche Verbesserung hinsichtlich der Klebeigenschaften eines Homo-, Co- oder Terpolymeren erzielt werden kann. Solche Harze sind beispielsweise in Ullmanns Encyklopädie der technischen Chemie, Band 12, 4. Auflage, Verlag Chemie, Weinheim 1976, S. 525 - 555 beschrieben. Solche Harze haben üblicherweise eine durchschnittliche Molekularmasse unterhalb von 2000 g/mol. Die Harze, sowohl die bei Raumtemperatur festen wie die flüssigen, sind üblicherweise nicht kristallisierbar und besitzen dementsprechend keinen scharfen Schmelzpunkt. Die unter dem Begriff niedermolekulare Harze verstandenen Materialien weisen hingegen eine nach der Kugel- und Ring-Methode nach ASTM E-28 bzw. DIN 1995 bestimmbare Erweichungstemperatur auf. Diese Harze können die Schmelzeviskosität reduzieren, so dass es zu einer deutlichen Vergleichmäßigung der Schmelzehomogenität kommen kann. Bedingt durch die Fließfähigkeitsverbesserung bei Zugabe der niedermolekularen Harze besitzen Folien mit Aussenschichten aus ohnehin schon weichen Co- oder Terpolymeren den Nachteil, dass sie sehr glatte Oberflächen aufweisen, die dadurch den Folien einen blockigen Charakter geben.

Es stellte sich somit die Aufgabe eine weichelastische Folie mit einem mechanischen Eigenschaftsprofil, das dem von Weich-PVC überlegen ist, kombiniert mit einer hohen Wasserdampfundurchlässigkeit bereitzustellen. Zur Minimierung der bei der Fertigung anfallenden Kosten sollte die Kombination der Eigenschaften nach Möglichkeit in einem Einstufen-Prozess erfolgen.

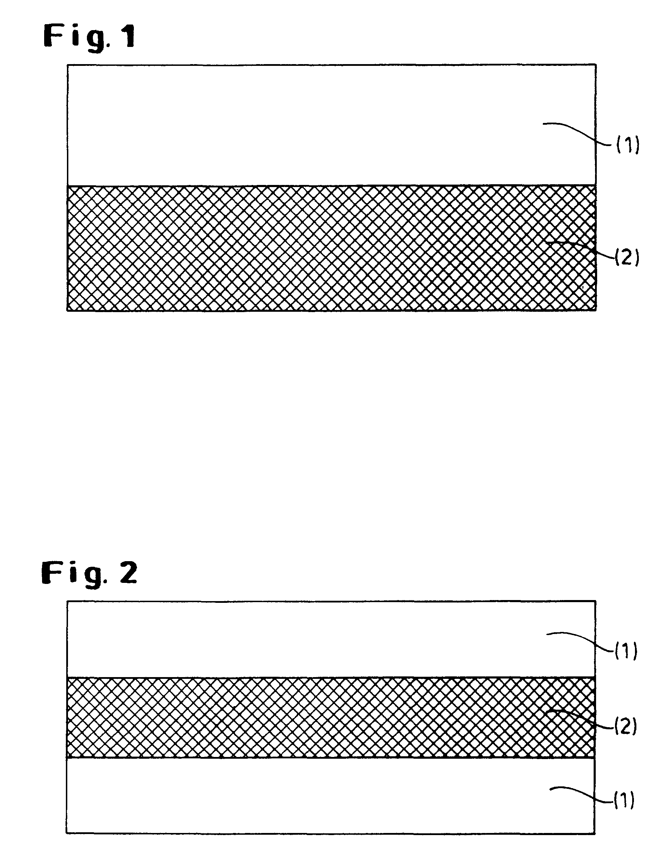

Erfindungsgemäß gelang es, eine den genannten Anforderungen genügende Folie bereitzustellen, die dadurch gekennzeichnet ist, dass die Folie aus mindestens zwei Schichten (siehe Fig. 1) aufgebaut ist, wobei mindestens eine Schicht aus einem thermoplastischen Polyurethan (1) besteht. Die Folie wird weiterhin aufgebaut aus mindestens einer weiteren Schicht (2), die aus einem Olefin-basierenden Polymer-Haftvermittler gebildet wird, der Maleinsäureanhydrid als Rezepturkomponente enthält und dessen Vicat-Erweichungstemperatur, gemessen nach ASTM D 1525, kleiner als 60°C liegt. Die Folie weist eine Gesamtdicke zwischen 50 µm und 600 µm auf, wobei die Dicke der Schicht(en) aus thermoplastischen Polyurethanen zwischen 20 µm und 400 µm und die Dicke der Haftvermittler-Schicht zwischen 10 µm und 200 µm beträgt. Die Schichtenzuordnung entspricht der beigefügten Fig. 1 der erfindungsgemäßen Mehrschichtfolie.

Erfindungsgemäß bevorzugt sind Haftvermittler in der Schicht (2) die dadurch charakterisiert sind, dass der Vicat-Erweichungsbereich der Haftvermittler-Komponente, gemessen nach ASTM D 1525, bei Temperaturen kleiner als 50°C liegt.

Zur Herstellung der Haftvermittlerschicht (2) sind vorzugsweise auch Copolymerisate des Ethylens mit Maleinsäureanhydrid und Estern von α,β-einfach ungesättigten Alkoholen oder Carbonsäuren geeignet. Insbesondere sind dies Copolymerisate aus Ethylen und Acrylsäureestern, Methacrylsäureestern oder Vinylacetat.

In einer besonders bevorzugten Ausführung werden in der Schicht (2) haftvennittelnde Komponenten eingesetzt, die dadurch gekennzeichnet sind, dass sie mindestens aus den Comonomeren Ethylen und Maleinsäureanhydrid aufgebaut sind, wobei der Anteil des Maleinsäureanhydrids an der Gesamtmasse der zur Folienherstellung eingesetzten haftvermittelnden Substanz weniger als 6 Gew.-% beträgt.

Zur Realisierung der niedrigen Vicat-Erweichungstemperatur werden erfindungsgemäß bevorzugt haftvermittelnde Komponenten eingesetzt, die Chloroform-extrahierbare niedermolekulare Harze als Rezepturkomponenten enthalten.

Hierbei werden Chloroform-extrahierbare niedermolekulare Harze bevorzugt, welche die adhäsiven Eigenschaften der haftvermittelnden Komponente derart verbessern, daß sich eine sehr gute Verbundhaftung ergibt. Zudem wird durch Zugabe des Harzes das Phasenverhalten der Haftvermittler-Komponente verändert. Die Erweichungstemperatur wird abgesenkt und damit die Elastizität und Flexibilität verbessert.

Erfindungsgemäß geeignete niedermolekulare Harze können beispielsweise den Stoffklassen der natürlichen Harze, dies sind beispielsweise Asphaltite, Balsame, Kiefernbalsame, rezente Harze, fossile Harze, Kolophonium, Kolophonium-Derivate oder Schellack, und/oder der synthetischen Harze, wie z.B. aliphatische oder aromatische Kohlenwasserstoff-Harze, teilweise oder vollständig hydrierte Kohlenwasserstoff-Harze, modifizierte Kohlenwasserstoff-Harze, Inden-Cumaron-Harze, Furan-Harze, Keton-Harze aber auch Polyamid-Harze entstammen. Niedermolekulare Harze werden beispielsweise unter den Handelsnamen Escorez® oder Fural® am Markt angeboten.

Bevorzugt sind Harze, deren Erweichungspunkt kleiner 100°C liegt, gemessen nach ASTM E-28 bzw. DIN 1995 mit Kugel und Ring.

Erfindungsgemäß geeignete Haftvermittler können auch auf Maleinsäure-modifizierten wachsartigen Ethylenpolimerisaten basieren. Hierzu wird Ethylen in der Gegenwart von Wasserstoff polymerisiert, anschließend oxidiert und mit Maleinsäure modifiziert. Derartige Wachse sind dann durch einen Erweichungsbereich von kleiner als 150°C charakterisiert, gemessen nach ASTM E-28 bzw. DIN 1995 mit Kugel und Ring.

Die Schicht (1) der erfindungsgemäßen Mehrschichtfolie ist aus wenigstens einem thermoplastischen Polyurethanelastomeren aufgebaut, vorzugsweise aus einem überwiegend linearen thermoplastischen Polyurethanelastomeren, dessen längerkettige Diolkomponente ein Polyester oder Polyether ist, und die eine Shore-Härte von vorzugsweise 75 - 95 A, besonders bevorzugt 85 - 95 A, bestimmt nach DIN 53 505, aufweist.

Geeignete thermoplastische Polyurethane sind beispielsweise unter den Handelsnamen Desmopan®, Elastollan®, Estane®, Morthane® oder Texin® erhältlich.

Eine geeignete Ausführung der erfindungsgemäßen Folien enthält in der aus thermoplastischen Polyurethanen gebildeten Schicht (1) zusätzlich gebräuchliche Additive aus der Gruppe umfassend
I. Antiblockmittel, anorganische oder organische Abstandshalter,
II. Gleit- oder Entformungsmittel,
III. Pigmente oder Füllstoffe und
IV. Stabilisatoren.

Der Anteil der genannten Additive I bis IV liegt in Summe bevorzugt zwischen 0% und 30%.

Die gebräuchlichen Additive, die in den erfindungsgemäßen Folien enthalten sein können, sind beispielsweise bei Gächter und Müller beschrieben in: Kunststoff-Additive, Carl Hanser Verlag München, 3. Ausgabe (1989).

Ein mindestens dreischichtiger Aufbau der Mehrschichtfolie (siehe Fig. 2), dadurch gekennzeichnet, dass die den Haftvermittler enthaltende Schicht (2) mindestens zwischen zwei aus thermoplastischem Polyurethan aufgebauten Schichten (1) liegt stellt eine besonders bevorzugte Ausführung der erfindungsgemäßen Folie dar.

Zur Herstellung der erfindungsgemäßen Mehrschichtfolie eignen sich besonders die gängigen thermischen Umformverfahren zur Verarbeitung von Kunststoffen zu mehrschichtigen Flächengebilden. Hier wäre die Herstellung durch Coextrusion zu nennen, die bevorzugt nach dem Blasfolienverfahren erfolgt. Aufgrund der besseren erzielbaren Verbundhaftung ist die Coextrusion unter den geeigneten Herstellungsverfahren von mehrschichtigen thermoplastischen Flächengebilden im besonderen Maß bevorzugt.

Die erfindungsgemäßen Folien können mit den bekannten physikalischen und chemischen Behandlungsmethoden wie beispielsweise der Corona-Behandlung ein- oder beidseitig in ihren Oberflächeneigenschaften modifiziert werden.

Die erfindungsgemäße Folie eignet sich zur Herstellung von Füllkörpern, wobei das Füllgut sowohl flüssiger als auch gasförmiger Natur sein kann. Insbesondere eignen sich derartige Füllkörper zur Aufnahme von Wasser. Die Herstellung der Füllkörper erfolgt unter Einsatz gängiger Fügeverfahren, wie z.B. Hochfrequenzschweißen.

Erfindungsgemäß besonders bevorzugt ist der Einsatz der Folie zur Herstellung von Wasserbetten oder Wärme-Kälte-Kissen.

Die im Rahmen der nachfolgenden Beispiele und Vergleichsbeispiele beschriebenen Folien wurden durch Blasfoliencoextrusion hergestellt. Die zum Aufschluß thermoplastischer Harze geeigneten Schneckenwerkzeuge sind in ihrem Aufbau z.B. von Wortberg, Mahlke und Effen in: Kunststoffe, 84 (1994) 1131-1138, von Pearson in: Mechanics of Polymer Processing, Elsevier Publishers, New York, 1985 oder der Fa. Davis-Standard in: Paper, Film & Foil Converter 64 (1990) S. 84 - 90 beschrieben. Werkzeuge zum Ausformen der Schmelze zu Folien sind u.a. von Michaeli in: Extrusions-Werkzeuge, Hanser Verlag, München 1991 erläutert.

### Beispiel 1

Mit Hilfe eines Zweischicht-Blasfolienwerkzeuges wurde eine Folie hergestellt, deren Schicht (1) aus einem Ether-TPU der Shore-A-Härte 87, gemessen nach DIN 53 505, entsprechend einer Härte von 36 Shore-D, gebildet wurde. Dieser 50 µm dicken Schicht wurden als Additive 4% Abstandshalter und 1% Wachse zugesetzt. Sämtliche für diese Schicht eingesetzten Komponenten wurden gemeinsam in einem Extruder aufgeschmolzen.

Die 50µm Schicht (2) wurde aus einer haftvermittelnden Komponente hergestellt. Als haftvermittelnde Komponente wurde ein Copolymerisat aus Ethylen und Maleinsäureanhydrid mit einem Maleinsäureanhydrid-Anteil unter 5 Gew.-% eingesetzt. Der MFI lag zwischen 3,3 und 3,5 g/10 min , gemessen nach DIN 53 735 bei 190°C und einer Prüfbelastung von 2,16 kg. Die Dichte lag bei 0,88 g/cm³. Aufgrund der Anwesenheit einer mit Chloroform extrahierbaren Rezepturkomponente aus niedermolekularem Kohlenwasserstoff-Harz lag die Vicat-Erweichungstemperatur des verwendeten Haftvermittlers unter 40°C, gemessen nach ASTM D 1525. Die Härte dieser zum Aufbau der haftvermittelnden Schicht verwendeten Komponente betrug ca. 67 Shore-A, gemessen nach DIN 53 505, entsprechend ca. 15 Shore-D.

Die Extrusionseinrichtungen wurden mit Temperaturen zwischen 160°C und 200°C betrieben. Die beiden Schmelzeströme wurden in einem Zweischicht-Blasfolienkopf mit einer Verarbeitungstemperatur von 195°C übereinandergelegt und durch eine Ringspaltdüse mit einem Durchmesser von 130 mm ausgetragen. Durch Anblasen mit Luft wurde die ringförmige Schmelzefahne abgekühlt, anschließend flachgelegt, getrennt und aufgewickelt.

### Beispiel 2

Mit Hilfe eines Dreischicht-Blasfolienwerkzeuges wurde eine Folie hergestellt, deren 100µm Haftvermittler-Schicht (2) beidseitig durch eine jeweils 50µm Schicht (1) aus thermoplastischem Polyurethan abgedeckt ist. Die verwendeten Rohstoffe der Haftvermittler-Schicht (2) und der Schichten (1) aus thermoplastischem Polyurethan waren analog dem Beispiel 1 gewählt.

Die Extrusionseinrichtungen wurden mit Temperaturen zwischen 160°C und 200°C betrieben. Die drei Schmelzeströme wurden in einem Dreischicht-Blasfolienkopf mit einer Verarbeitungstemperatur von 195°C übereinandergelegt und durch eine Ringspaltdüse mit einem Durchmesser von 130 mm ausgetragen. Durch Anblasen mit Luft wurde die ringförmige Schmelzefahne abgekühlt, anschließend flachgelegt, getrennt und aufgewickelt.

### Beispiel 3

Eine dreischichtige Folie wurde analog zu dem in Beispiel 2 beschriebenen Aufbau hergestellt.

Die haftvermittelnde Komponente hatte einen MFI von 1,3 g/10 min , gemessen nach DIN 53 735 bei 190°C und einer Prüfbelastung von 2,16 kg. Diese haftvermittelnde Komponente wurde aus den Monomeren Ethylen, Vinylacetat und Maleinsäureanhydrid synthetisiert. Ihr Schmelzpunkt lag bei 70°C, die Vicat-Erweichungstemperatur, gemessen nach ASTM D 1525 betrug 52 °C. Ihre Dichte lag bei 0,93 g/cm³.

### Vergleichsbeispiel 1

Eine dreischichtige Folie wurde analog zu dem in Beispiel 2 beschriebenen Aufbau hergestellt.

Als TPU wurde die gleiche Mischung wie in Beispiel 1 eingesetzt.

Die Haftvermittler-Schicht (2) wurde aus einem Ethylen-Copolymer mit 19 Gew.-% Comonomer-Anteil gebildet. Als Comonomere kamen Butylacrylat und Maleinsäureanhydrid zum Einsatz. Der MFI des Haftvermittlers betrug 5,0 g/10 min, gemessen nach DIN 53 735 bei 190°C und einer Prüfbelastung von 2,16 kg. Der Schmelzpunkt lag bei 95°C, der Vicat-Erweichungspunkt bei 63°C, gemessen nach ASTM D 1525, und die Dichte bei 0,94 g/cm³.

### Bewertung der im Rahmen der Beispiele und Vergleichsbeispiele hergestellten Folien

Die Verbundhaftung sowie die Wasserdampfdurchlässigkeit wurden an den im Rahmen der Beispiele und Vergleichsbeispiele hergestellten Mustern überprüft. Die Verbundhaftung wurde nach DIN 53 357, Verfahren B bestimmt. Hierbei wird unter Verbundhaftung der Maximalwert der Kraft verstanden, der notwendig ist, um die zu prüfende Folie von einem 15 mm breiten Prüfstreifen auf einer Länge von 10 mm unter einem Trennwinkel von 90° spaltend zu trennen. Die Abzugsgeschwindigkeit beträgt hierbei 100 mm/min. Die Wasserdampfdurchlässigkeit wurde nach DIN 53122 bei 23°C und 85% relative Feuchtigkeit bestimmt.

In der nachfolgenden Tabelle sind charakteristische Daten der im Rahmen der Beispiele und Vergleichsbeispiele hergestellten Folien wiedergegebenen. Diese zeigen deutlich, daß die in den Beispielen beschriebenen erfindungsgemäßen Folien der im Rahmen des Vergleichsbeispieles dargestellten Folie gegenüber im Vorteil sind.

Aus Tabelle 1 ist deutlich erkennbar, daß die in den Beispielen dargestellten erfindungsgemäßen mehrschichtigen Folienaufbauten unter Verwendung von Haftvermittlern mit niedrigen Vicat-Erweichungstemperaturen, die erfindungsgemäß unter 60°C liegen, dem in dem Vergleichsbeispiel vorgestellten ebenfalls mehrschichtigen Aufbau hinsichtlich der bedeutsamen Verbundhaftung überlegen sind. Die im Rahmen des Vergleichsbeispieles hergestellte Folie wurde unter Verwendung eines Haftvermittlers mit höherer Erweichungstemperatur gefertigt.

Tabelle 1 belegt außerdem, daß die wasserdampfsperrende Wirkung des Haftvermittlers bei den besonders bevorzugten Ausführungen der mehrschichtigen Folien, bei denen die Vicat-Erweichungstemperatur des verwendeten Haftvermittlers unter 50°C liegt, am wirkungsvollsten ist.

**Tabelle 1**

| Eigenschaften der im Rahmen der Beispiele und Vergleichsbeispiele hergestellten Folien | | | | | | |
|---|---|---|---|---|---|---|
| Eigenschaft | Bestimmungsmethode | Einheit | Beispiel 1 | Beispiel 2 | Beispiel 3 | Vergleichsbeispiel 1 |
| Verbundhaftung | DIN 53 357 | N/15mm | >10 | >10 | 8,2 | 0,3 |
| Wasserdampfdurchlässigkeit* | DIN 53 122 | g/m²·d | 7 | 6 | 16 | 14 |
| Vicat-Erweichungspunkt der haftvermittelnden Komponente | ASTM D 1525 | °C | <40 | <40 | 52 | 63 |

| | | | | | | |
|---|---|---|---|---|---|---|
| *: Umgerechnet auf eine Foliendicke von 200 µm | | | | | | |

## Patentansprüche

1. Mehrschichtige Folie mit mindestens einer Schicht, die im wesentlichen aus thermoplastischen Polyurethanen gebildet wird, und mindestens einer weiteren Schicht die aus einem Olefin-basierenden Polymer-Haftvermittler gebildet wird, der Maleinsäureanhydrid als Rezepturkomponente enthält und dessen Vicat-Erweichungstemperatur, gemessen nach ASTM D 1525, kleiner als 60°C ist und die Folie eine Gesamtdicke zwischen 50 µm und 600 µm hat, wobei die Dicke der Schicht(en) aus thermoplastischen Polyurethanen zwischen 20 µm und 400 µm, die Dicke der Haftvermittler-Schicht zwischen 10 µm und 200 µm beträgt.

2. Folie nach Anspruch 1, **dadurch gekennzeichnet, dass** die Haftvermittlerschicht beidseitig mindestens durch eine Schicht aus thermoplastischem Polyurethan abgedeckt wird.

3. Folie nach Anspruch 1 oder 2, **dadurch gekennzeichnet, dass** der Vicat-Erweichungsbereich der Haftvermittler-Komponente, gemessen nach ASTM D 1525, bei Temperaturen kleiner als 50°C liegt.

4. Folie nach mindestens einem der Ansprüche 1 bis 3, **dadurch gekennzeichnet, dass** der Anteil des als Rezepturkomponente zur Synthese der haftvermittelnden Substanz verwendeten Maleinsäure-Anhydrids an der Gesamtmasse der zur Folienherstellung eingesetzten haftvermittelnden Substanz weniger als 6 Gew.-% beträgt.

5. Folie nach einem der vorangehenden Ansprüche, **dadurch gekennzeichnet, dass** die als Haftvermittler eingesetzten Materialien Chloroform-extrahierbare niedermolekulare Harze als Zusatzkomponenten enthalten.

6. Folie nach einem der vorangehenden Ansprüche, **dadurch gekennzeichnet, dass** die aus thermoplastischen Polyurethanen gebildeten Schichten mit gebräuchlichen Additiven aus der Gruppe umfassend
I. Antiblockmittel, anorganische oder organische Abstandshalter,
II. Gleit- oder Entformungsmittel,
III. Pigmente oder Füllstoffe und
IV. Stabilisatoren
ausgerüstet sind, wobei der Anteil der genannten Additive I bis IV in Summe bevorzugt zwischen 0% und 30% liegt.

7. Folie nach einem der vorangehenden Ansprüche, **dadurch gekennzeichnet, dass** sie mittels eines Coextrusionsverfahrens hergestellt wurde.

8. Folie nach Anspruch 7, **dadurch gekennzeichnet, dass** sie durch Blasfolien-Coextrusion hergestellt wurde.

9. Folie nach einem der vorangehenden Ansprüche, **dadurch gekennzeichnet, dass** mindestens eine der Aussenschichten einer physikalischen und/oder chemischen Oberflächenbehandlung unterzogen wurde.

10. Verwendung einer Folie gemäß einem der vorangehenden Ansprüche, zur Herstellung von Füllkörpern.

11. Verwendung nach Anspruch 10, **dadurch gekennzeichnet, dass** die Folie mittels gängiger Fügeverfahren zu einem geschlossenen Füllkörper verarbeitet wird.

12. Verwendung nach Anspruch 10 oder 11, **dadurch gekennzeichnet, dass** die Füllkörper Wasserbetten oder Wärme-Kälte-Kissen sind.

## Claims

1. Multilayer film having at least one layer substantially formed from thermoplastic polyurethanes and at least one further layer, which is formed from an olefin-based polymer coupling agent, which contains maleic anhydride as a formulation component and the Vicat softening temperature of which, measured to ASTM D 1525, is less than 60°C and the film has a total thickness of between 50 µm and 600 µm, wherein the thickness of the layer(s) of thermoplastic polyurethanes is between 20 µm and 400 µm and the thickness of the coupling agent layer is between 10 µm and 200 µm.

2. Film according to claim 1, **characterised in that** the coupling agent layer is covered on both sides by at least one layer of thermoplastic polyurethane.

3. Film according to claim 1 or 2, **characterised in that** the Vicat softening range of the coupling agent component, measured to ASTM D 1525, is at temperatures of less than 50°C.

4. Film according to at least one of claims 1 to 3, **characterised in that** the proportion of maleic anhydride used as a formulation component to synthesise the coupling substance in the total weight of the coupling substance used for film production is less than 6 wt.%.

5. Film according to one of the preceding claims, **characterised in that** the materials used as coupling agents contain chloroform-extractable low molecular weight resins as additional components.

6. Film according to one of the preceding claims, **characterised in that** conventional additives selected from the group comprising
I. anti-blocking agents, inorganic or organic spacers,
II. lubricants or mould release agents,
III. pigments or fillers and
IV. stabilisers
are added to the layers formed from thermoplastic polyurethanes, wherein the proportion of the stated additives I to IV is in total preferably between 0% and 30%.

7. Film according to one of the preceding claims, **characterised in that** it was produced using a coextrusion process.

8. Film according to claim 7, **characterised in that** it was produced using blown film coextrusion.

9. Film according to one of the preceding claims, **characterised in that** at least one of the outer layers has been subjected to a physical and/or chemical surface treatment.

10. Use of a film according to one of the preceding claims for the production of containers.

11. Use according to claim 10, **characterised in that** the film is converted into a sealed container by means of usual joining methods.

12. Use according to claim 10 or 11, **characterised in that** the containers are waterbeds or heating/cooling pads.

## Revendications

1. Feuille multicouche avec au moins une couche qui est formée essentiellement de polyuréthannes thermoplastiques et au moins d'une autre couche qui est formée à partir d'un agent adhésif polymère à base d'oléfine, qui contient l'anhydride d'acide maléique comme composant de la formule et dont la température de ramollissement de Vicat, mesurée suivant ASTM D 1525, est inférieure à 60°C, et la feuille ayant une épaisseur totale entre 50 µm et 600 µm, l'épaisseur des couches de polyuréthannes thermoplastiques étant comprise entre 20 µm et 400 µm, l'épaisseur de la couche d'agent adhésif entre 10 µm et 200 µm.

2. Feuille suivant la revendication 1, **caractérisée en ce que** la couche d'agent adhésif est recouverte des deux côtés au moins par une couche en polyuréthanne thermoplastique.

3. Feuille suivant la revendication 1 ou 2, **caractérisée en ce que** la zone de ramollissement de Vicat du composant de l'agent adhésif, mesurée suivant ASTM D 1525, se situe à des températures inférieures à 50°C.

4. Feuille suivant l'une au moins des revendications 1 à 3, **caractérisée en ce que** la teneur en anhydride d'acide maléique, utilisé comme composant de la formule pour la synthèse de la substance adhésive, dans la masse totale de la substance adhésive utilisée pour la fabrication de la feuille est inférieure à 6 % en poids.

5. Feuille suivant l'une des revendications précédentes, **caractérisée en ce que** les matériaux utilisés comme agents adhésifs contiennent comme composants supplémentaires des résines à faible poids moléculaire extractibles à l'aide de chloroforme.

6. Feuille suivant l'une des revendications précédentes, **caractérisée en ce que** les couches constituées de polyuréthannes thermoplastiques sont pourvues des additifs habituels tels que ceux du groupe comprenant
I. des agents anti-adhérents, des écarteurs inorganiques ou organiques,
II. des lubrifiants ou agents de démoulage,
III. des pigments ou matières de charge et
IV. des stabilisateurs,
la teneur en additifs cités I à IV se situant au total de préférence entre 0% et 30%.

7. Feuille suivant l'une des revendications précédentes, **caractérisée en ce qu'**elle a été fabriquée à l'aide d'un procédé de coextrusion.

8. Feuille suivant l'une des revendications précédentes, **caractérisée en ce qu'**elle a été fabriquée par soufflage de gaines avec coextrusion.

9. Feuille suivant l'une des revendications précédentes, **caractérisée en ce qu'**au moins une des couches extérieures a été soumise à un traitement de surface physique et/ou chimique.

10. Utilisation d'une feuille suivant l'une des revendications précédentes pour la fabrication de récipients.

11. Utilisation suivant la revendication 10, **caractérisée en ce que** la feuille est transformée en un récipient fermé à l'aide de procédés courants d'assemblage.

12. Utilisation suivant la revendication 10 ou 11, **caractérisée en ce que** les récipients sont des lits à eau ou des coussins thermiques de froid et de chaud.
